(19) Europäisches Patentamt
European Patent Office
Office européen des brevets

(11) **EP 3 439 476 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **17716784.8**

(22) Anmeldetag: **29.03.2017**

(51) Internationale Patentklassifikation (IPC):
***A01P 1/00*** *(2006.01)*

(52) Gemeinsame Patentklassifikation (CPC):
(C-Sets verfügbar)
**A01N 43/80; A01P 1/00** (Forts.)

(86) Internationale Anmeldenummer:
**PCT/EP2017/000380**

(87) Internationale Veröffentlichungsnummer:
**WO 2017/174180 (12.10.2017 Gazette 2017/41)**

(54) **SYNERGISTISCHE BIOZIDZUSAMMENSETZUNGEN ENTHALTEND 5-CHLOR-2-METHYLISOTHIAZOLIN-3-ON**

SYNERGETIC BIOCIDAL COMPOSITIONS COMPRISING 5-CHLORINE-2-METHYLISOTHIAZOLIN-3-ONE

COMPOSITIONS BIOCIDES SYNERGIQUES CONTENANT DE LA 5-CHLORO-2-MÉTHYLISOTHIAZOLIN-3-ONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2016 EP 16000775**

(43) Veröffentlichungstag der Anmeldung:
**13.02.2019 Patentblatt 2019/07**

(73) Patentinhaber: **THOR GmbH**
**67346 Speyer (DE)**

(72) Erfinder:
• **BAUM, Rüdiger**
**68809 Neulussheim (DE)**
• **WUNDER, Thomas**
**67435 Neustadt a.d. Weinstrasse (DE)**
• **SCHMIDT, Hans-Jürgen**
**67346 Speyer (DE)**

(56) Entgegenhaltungen:
EP-A1- 1 676 479        WO-A1-2004/108841
WO-A1-2016/034266       WO-A2-2006/074788
US-A- 4 732 905

• DATABASE WPI 9 January 2002 Derwent World Patents Index; AN 2002-355048, XP002769891
• DATABASE WPI 2 April 2009 Derwent World Patents Index; AN 2009-g51328, XP002769892
• DATABASE WPI 10 September 1996 Derwent World Patents Index; AN 1996-461226, XP002769893

(52) Gemeinsame Patentklassifikation (CPC): (Forts.)

C-Sets
**A01N 43/80, A01N 35/08, A01N 43/80, A01N 59/16**

**Beschreibung**

Die vorliegende Erfindung betrifft eine Biozidzusammensetzung, die 5-Chlor-2-methylisothiazolin-3-on sowie wenigstens eine weitere Komponente ausgewählt aus der Gruppe 1,2-Benzisothiazolin-3-on, 2-Brom-2-nitropropan-1,3-diol und Zink wobei das Zink, als Zinkverbindung ausgewählt aus der Gruppe bestehend aus Zinkoxid, Zinkchlorid und Zinkcarbonat vorliegt. Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons, enthält. Die Erfindung betrifft ferner die Verwendung der erfindungsgemäßen Biozidzusammensetzungen zur Konservierung von technischen Produkten.

Technische, insbesondere wässrige Produkte, wie Farben, Lacke, Emulsionen und kosmetische Produkte werden üblicherweise unter Verwendung natürlicher oder biologisch abbaubarer Rohstoffe hergestellt. Diese Rohstoffe und das als Lösemittel verwendete Wasser sind dabei häufig mit Keimen, wie Bakterien, Hefen und Pilzen, belastet. Verzichtet man bei der Herstellung dieser Produkte auf eine Konservierung, so können diese bereits einen Tag nach der Herstellung hohe Keimzahlen aufweisen.

Um sicher zustellen, dass diese Produkte den hygienischen Anforderungen gerecht werden und damit die Haltbarkeit der technischen Produkte gewährleistet ist, werden den Produkten so genannte Biozide hinzugegeben. Eines dieser Biozide ist das 5-Chlor-2-methylisothiazolin-3-on (CMIT). Dieses weist eine breite biozide Wirkung auf, hat aber bei der praktischen Handhabung verschiedene Nachteile. Beispielsweise kann diese Verbindung bei Personen, die damit umgehen, Allergien auslösen.

Um die Nachteile dieses zwar äußerst wirksamen, aber auch mit Nachteilen für den Endanwender behafteten CMITs zu überwinden, wurde in den 90er Jahren nach alternativen Bioziden bzw. nach Biozidzusammensetzungen gesucht, deren Wirkstoffe synergistisch zusammenwirken und beim gleichzeitigen Einsatz in geringeren Konzentrationen verwendet werden können, verglichen mit den nötigen Konzentrationen im Falle der Einzelkomponenten.

So kommt seit Anfang der 90er Jahre die in der EP 1 005 271 B1 offenbarte synergistische Mischung der Isothiazolinone 2-Methylisothiazolin-3-on (MIT) und 1,2-Benzisothiazolin-3-on (BIT) als Biozidzusammensetzung zum Einsatz. Diese Mischung wird von der Thor GmbH (Speyer, Bundesrepublik Deutschland) als Acticide MBS vertrieben, ist frei von 5-Chlor-2-methylisothiazolin-3-on und stellt zu heutiger Zeit den Standard bei der Gebindekonservierung von wasserbasierenden Farben und Putzen dar.

Ferner offenbart beispielsweise die europäische Offenlegungsschrift EP 0 676 140 als Ersatz für 5-Chlor-2-methylisothiazolin-3-on enthaltende Zusammensetzungen eine synergistische Biozidzusammensetzung, die 2-Methylisothiazolin-3-on und 2-n-Octylisothiazolin-3-on enthält.

Ebenfalls offenbart die EP-B 1 030 558 eine synergistische Biozidzusammensetzung, die 2-Methylisothiazolin-3-on und 3-Iod-2-propinyl-N-butylcarbamat enthält. Diese synergistische Zusammensetzung eignet sich bereits in geringen Konzentrationen zur Bekämpfung von Mikroorganismen.

WO2006074788 offenbart synergistische Zusammensetzungen, die 1,2-Benzisothiazolin-3-on und eine Mischung aus CMIT und MIT enthalten.

Ausgehend von dem vorstehend diskutierten Stand der Technik besteht Bedarf an weiteren Biozidzusammensetzungen, deren Komponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Diese Aufgabe löst die Erfindung durch eine Biozidzusammensetzung enthaltend 5-Chlor-2-methylisothiazolin-3-on, sowie wenigstens eine weitere Komponente ausgewählt aus der Gruppe 1,2-Benzisothiazolin-3-on, 2-Brom-2-nitropropan-1,3-diol und Zink. Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Die erfindungsgemäße Biozidzusammensetzung hat den Vorteil, dass das 5-Chlor-2-methylisothiazolin-3-on und die wenigstens eine Komponente aus der vorstehend wiedergegebenen Gruppe synergistisch zusammenwirken und deshalb beim gleichzeitigen Einsatz in geringen Konzentrationen verwendet werden können, verglichen mit niedrigen Konzentrationen im Falle der Einzelkomponenten.

Die vorliegende Erfindung ermöglicht es ferner, unter Verwendung des äußerst wirksamen 5-Chlor-2-methylisothiazolin-3-ons, das frei bzw. naherzu frei von 2-Methylisothiazolin-3-on ist, Produkte mit zu konservieren, und diese vor dem Inverkehrbringen so zu behandeln, dass das 5-Chlor-2-methylisothiazolin-3-on in dem Endprodukt nicht mehr vorhanden ist, so dass das von diesen Produkten ausgehende Allergierisiko für den Endanwender deutlich reduziert ist.

Die erfindungsgemäße Biozidzusammensetzung ist allgemein dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons, enthält. Gemäß einer bevorzugten Ausführungsform der Erfindung ist die Biozidzusammensetzung dadurch gekennzeichnet, dass sie Methyl-4-isothiazolin-3-on im Bereich von 0 bis 1 Gew.-%, bezogen auf den Gesamtanteil des 5-Chlor-2-methyl-4-isothiazolin-3-ons, enthält. Gemäß einer besonders bevorzugten Ausführungsform ist die Biozidzusammensetzung dadurch gekennzeichnet, dass sie Methyl-4-isothiazolin-3-on im Bereich von 0 bis 0,5 Gew.-%, bezogen auf den Gesamtanteil des 5-Chlor-2-methyl-4-isothiazolin-3-ons, enthält.

"Wenigstens eine" bedeutet im Rahmen der vorliegenden Erfindung, dass die Biozidzusammensetzung eine einzige weitere Komponente bzw. Verbindung, oder mehrere, also zwei oder drei Komponenten bzw. Verbindungen aus der jeweiligen Gruppe enthält.

Die vorliegende Erfindung betrifft eine Biozidzusammensetzung, die 5-Chlor-2-methylisothiazolin-3-on und wenigstens eine weitere Komponente enthält. Die Biozidzusammensetzung ist dabei dadurch gekennzeichnet ist, dass sie Methyl-4-isothiazolin-3-on im Bereich von 0 bis 2 Gew.-%, bezogen auf den Gesamtanteil des 5-Chlor-2-methyl-4-isothiazolin-3-ons, enthält. Die Biozidzusammensetzung ist weiterhin dadurch gekennzeichnet,

dass das Gewichtsverhältnis von 5-Chlor-2-methylisothiazolin-3-on zu 1,2-Benzisothiazolin-3-on im Bereich von 1:2,5 bis 1:300 liegt,
dass das Gewichtsverhältnis von 5-Chlor-2-methylisothiazolin-3-on zu 2-Brom-2-nitropropan-1,3-diol im Bereich von 1:2 bis 1:40 liegt und
dass das Gewichtsverhältnis von 5-Chlor-2-methylisothiazolin-3-on zu Zink im Bereich von 1:6 bis 1:576 liegt.

Synergistische Biozidzusammensetzung enthaltend 5-Chlor-2-methylisothiazolin-3-on und 1,2-Benzisothiazolin-3-on (BIT):

Gemäß einer Ausführungsform betrifft die Erfindung eine Biozidzusammensetzung enthaltend 5-Chlor-2-methylisothiazolin-3-on sowie 1,2-Benzisothiazolin-3-on (BIT). Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Gemäß einer bevorzugten Ausführungsform betrifft die Erfindung eine Biozidzusammensetzung enthaltend 5-Chlor-2-methylisothiazolin-3-on sowie 1,2-Benzisothiazolin-3-on, in einem Gewichtsverhältnis 5-Chlor-2-methylisothiazolin-3-on zu 1,2-Benzisothiazolin-3-on allgemein im Bereich von 1:2,5 bis 1:300, bevorzugt im Bereich von 1:2,5 bis 1:100, besonders bevorzugt im Bereich von 1:2,5-1:50. Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Synergistische Biozidzusammensetzung enthaltend 5-Chlor-2-methylisothiazolin-3-on und 2-Brom-2-nitropropan-1,3-diol (Bronopol):

Gemäß einer Ausführungsform betrifft die Erfindung eine Biozidzusammensetzung enthaltend 5-Chlor-2-methylisothiazolin-3-on sowie 2-Brom-2-nitropropan-1,3-diol (Bronopol). Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Gemäß einer bevorzugten Ausführungsform betrifft die Erfindung eine Biozidzusammensetzung enthaltend 5-Chlor-2-methylisothiazolin-3-on sowie 2-Brom-2-nitropropan-1,3-diol in einem Gewichtsverhältnis von 5-Chlor-2-methylisothiazolin-3-on zu 2-Brom-2-nitropropan-1,3-diol allgemein im Bereich von 1:2 bis 1:40, bevorzugt im Bereich von 1:2 bis 1:30, besonders bevorzugt im Bereich von 1:5 bis 1:30. Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Synergistische Biozidzusammensetzung enthaltend 5-Chlor-2-methylisothiazolin-3-on und Zink

Gemäß einer Ausführungsform betrifft die Erfindung eine Biozidzusammensetzung enthaltend 5-Chlor-2-methylisothiazolin-3-on sowie Zink. Die erfindungsgemäße Biozidzusammensetzung ist dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält. Im Rahmen der Erfindung konnte nämlich gezeigt werden, dass sich die Wirkung des 5-Chlor-2-methyl-4-isothiazolin-3-ons in Anwesenheit von Zink überraschend synergistisch verstärkt.

Im Rahmen der vorliegenden Erfindung wird das Zink durch wenigstens eine Zinkverbindung, die als Zinkquelle dient, zur Verfügung gestellt.

Die Zinkverbindung ist dabei bevorzugt ausgewählt aus der Gruppe bestehend aus Zinkoxid, Zinkchlorid und Zinkcarbonat.

Gemäß einer bevorzugten Ausführungsform betrifft die Erfindung eine Biozidzusammensetzung enthaltend 5-Chlor-2-methylisothiazolin-3-on sowie Zink in einem Gewichtsverhältnis von 5-Chlor-2-methylisothiazolin-3-on zu Zink allgemein im Bereich von 1:6 bis 1:576, bevorzugt im Bereich von 1:6 bis 1:250, besonders bevorzugt im Bereich von 1:6 bis 1:125. Die vorstehend angegebene(n) Zinkverbindung(en) ist bzw. sind dabei in einer solchen Menge vorhanden, so dass sich in der Biozidzusammensetzung das vorstehend definierte Verhältnis zwischen 5-Chlor-2-methylisothiazolin-3-on und Zink ergibt. Die erfindungsgemäße Biozidzusammensetzung ist ferner dadurch gekennzeichnet, dass sie Methyl-4-isothiazolin-3-on im Bereich von 0 bis 2 Gew.-%, bezogen auf den Gesamtanteil des 5-Chlor-2-methyl-4-isothiazolin-3-ons enthält.

Eine Biozidzusammensetzung enthaltend ausschließlich 5-Chlor-2-methylisothiazolin-3-on mit einem Gehalt an Methyl-4-isothiazolin-3-on im Bereich von 0 bis 2 Gew.-%, bezogen auf den Gesamtanteil des 5-Chlor-2-methyl-4-isothiazolin-3-ons, und wenigstens eine weitere Komponente ausgewählt aus der Gruppe 1,2-Benzisothiazolin-3-on, 2-Brom-2-nitropropan-1,3-diol und Zink in den jeweils angegebenen Gewichtsverhältnissen ohne Vorliegen einer weiteren Komponente wird im Rahmen der vorliegenden Erfindung als "erfindungsgemäße Biozidzusammensetzung" bezeichnet werden.

Eine "erfindungsgemäße Biozidzusammensetzung" kann neben dem 5-Chlor-2-methylisothiazolin-3-on mit einem Gehalt an Methyl-4-isothiazolin-3-on im Bereich von 0 bis 2 Gew.-%, bezogen auf den Gesamtanteil des 5-Chlor-2-methyl-4-isothiazolin-3-ons, und der wenigstens einen weiteren Komponente, ausgewählt aus der Gruppe 1,2-Benzisothiazolin-3-on, 2-Brom-2-nitropropan-1,3-diol und Zink zusätzlich ein oder mehrere weitere Bestandteile aufweisen. Der oder die weiteren Bestandteile können dabei eine mikrobizide Wirkung aufweisen, oder sie können keine mikrobizide Wirkung aufweisen, also etwa ein Lösungsmittel, Dispergiermittel oder Suspensionsmittel sein.

Es ist vorteilhaft, wenn die erfindungsgemäße Biozidzusammensetzung das 5-Chlor-2-methylisothiazolin-3-on mit einem Gehalt an Methyl-4-isothiazolin-3-on im Bereich von 0 bis 2 Gew.-%, bezogen auf den Gesamtanteil des 5-Chlor-2-methyl-4-isothiazolin-3-ons, und die wenigstens eine weitere Komponente ausgewählt aus der Gruppe 1,2-Benzisothiazolin-3-on, 2-Brom-2-nitropropan-1,3-diol und Zink in einer Gesamtkonzentration von 0,5 bis 50 Gew.-%, bevorzugt von 1 bis 20 Gew.-%, besonders bevorzugt von 2,5 bis 10 Gew.-%, jeweils bezogen auf die gesamte Biozidzusammensetzung, enthält.

In einer weiteren Ausführungsform besteht die erfindungsgemäße Biozidzusammensetzung überwiegend aus 5-Chlor-2-methylisothiazolin-3-on mit einem Gehalt an Methyl-4-isothiazolin-3-on im Bereich von 0 bis 2 Gew.-%, bezogen auf den Gesamtanteil des 5-Chlor-2-methyl-4-isothiazolin-3-ons, und wenigstens einer weiteren Komponente ausgewählt aus der Gruppe 1,2-Benzisothiazolin-3-on, 2-Brom-2-nitropropan-1,3-diol und Zink (also der erfindungsgemäßen Biozidzusammensetzung bzw. dem Biozidgemisch). Dies bedeutet, dass die erfindungsgemäße Biozidzusammensetzung als Hauptbestandteil das erfindungsgemäße Biozidgemisch, vorzugsweise in einer Menge von gleich oder größer 50 Gew.-%, mehr bevorzugt in einer Menge von gleich oder größer 70 Gew.-%, insbesondere in einer Menge von gleich oder größer 90 Gew.-%, insbesondere in einer Menge von gleich oder größer 95 Gew.-%, bezogen auf die Gesamtmasse an biozidem Wirkstoff, enthält. Daneben kann mindestens ein weiteres Biozid vorhanden sein, ebenso wie ein oder mehrere Lösungsmittel, Dispergiermittel oder Suspensionsmittel.

Gemäß einer weiteren Ausführungsform der Erfindung besteht die erfindungsgemäße Biozidzusammensetzung im Wesentlichen aus dem erfindungsgemäßen Biozidgemisch, d.h., dass neben dem Gemisch wohl noch ein oder auch mehrere andere Biozide enthalten sein können, diese aber in einer solchen Menge vorliegen, in der kein Beitrag des jeweiligen von den Komponenten des Gemischs verschiedenen Biozids zum Gesamteffekt der entstehenden Mischung vorliegt. Wenn also die biozide Wirkung einer erfindungsgemäßen Biozidzusammensetzung, die - neben den Komponenten des erfindungsgemäßen Biozidgemischs als wesentlichem Bestandteil - noch ein oder mehrere weitere Biozide in untergeordneter bzw. geringfügigerer Konzentration aufweist, nicht verändert ist gegenüber dem Einsatz des erfindungsgemäßen Biozidgemischs, wird dieses im Zusammenhang mit der vorliegenden Erfindung als "im Wesentlichen bestehend" bezeichnet. Es können ein oder mehrere weitere Bestandteile ohne eine biozide Wirkung vorhanden sein, etwa Lösungsmittel.

In einer weiteren Ausführungsform kann die erfindungsgemäße Biozidzusammensetzung aus den Komponenten des erfindungsgemäßen Biozidgemischs als einzige biozide Wirkstoffe bestehen, also einem Wirkstoffgehalt von 100 % 5-Chlor-2-methylisothiazolin-3-on mit einem Gehalt an Methyl-4-isothiazolin-3-on im Bereich von 0 bis 2 Gew.-%, bezogen auf den Gesamtanteil des 5-Chlor-2-methyl-4-isothiazolin-3-ons, und wenigstens einer weiteren Komponente ausgewählt aus der Gruppe 1,2-Benzisothiazolin-3-on, 2-Brom-2-nitropropan-1,3-diol und Zink. In einem solchen Fall ist es lediglich möglich, dass ein oder mehrere weitere Bestandteile ohne eine biozide Wirkung vorhanden sind, etwa Lösungsmittel bzw. Stabilisierungsmittel.

Gemäß einer Ausführungsform der Erfindung liegt die erfindungsgemäße Biozidzusammensetzung als Konzentrat vor, welches den damit zu konservierenden Stoffen bzw. Produkten zugegeben wird. Das Konzentrat weist vorteilhafterweise das 5-Chlor-2-methylisothiazolin-3-on in einer Menge von 0,5 bis 50 Gew.-%, bevorzugt in einer Menge von 0,5 bis 20 Gew.-%, besonders bevorzugt in einer Menge von 0,7 bis 10 Gew.-%, bezogen auf die Gesamtmasse des Konzentrats, auf. Die Menge an der wenigstens einen weiteren Verbindung ausgewählt aus der Gruppe 1,2-Benzisothiazolin-3-on, 2-Brom-2-nitropropan-1,3-diol und Zink in dem Konzentrat beträgt allgemein 0,5 bis 50 Gew.-%, bevorzugt 1 bis 20 Gew.-%, besonders bevorzugt 1 bis 5 Gew.-%, bezogen auf die Gesamtmasse des Konzentrats.

In einer vorteilhaften Ausführungsform liegt die Biozidzusammensetzung in Form einer flüssigen Zubereitung vor, beispielsweise als Lösung, Suspension oder Dispersion in einem flüssigen Medium. Selbstverständlich kann die erfindungsgemäße Biozidzusammensetzung auch direkt in einem zu konservierenden Produkt gemischt werden. Dies geschieht durch Zugabe der einzelnen mikrobiziden Wirkkomponenten zu dem zu konservierenden Produkt.

Es ist zweckmäßig, wenn die erfindungsgemäße Biozidzusammensetzung für die Anwendung in Kombination mit einem polaren oder unpolaren flüssigen Medium vorliegt. Bevorzugte polare flüssige Medien sind Wasser, aliphatische Alkohole mit 1 bis 4 Kohlenstoffatomen, zum Beispiel Ethanol und Isopropanol, ein Glykol, zum Beispiel Ethylenglykol, Diethylenglykol, 1,2-Propylenglykol, Dipropylenglykol und Tripropylenglykol, ein Glykolether, wie Butylglykol und Butyldiglykol, ein Glykolester, wie Butylglykolacetat oder 2,2,4-Trimethylpentandiolmonoisobutyrat, ein Polyethylenglykol, ein Propylenglykol, N,N-Dimethylformamid oder ein Gemisch aus zwei oder mehr solcher Medien. Das polare flüssige Medium ist insbesondere Wasser und/oder Glykol.

Als unpolare flüssige Medien können beispielsweise Aromaten, vorzugsweise Xylol und Toluol dienen, auch diese können alleine oder als Gemische aus zwei oder mehreren solcher Medien eingesetzt werden.

Die erfindungsgemäße Biozidzusammensetzung kann auch gleichzeitig mit einem polaren oder einem unpolaren flüssigen Medium kombiniert werden.

Allgemein ist es möglich, die erfindungsgemäße Biozidzusammensetzung durch den Zusatz weiterer Wirkstoffe speziellen Anwendungsgebieten anzupassen, beispielsweise im Sinne einer erhöhten Wirkung oder einer verbesserten Verträglichkeit mit den vor den Mikroorganismen schützenden Stoffen. Diese weiteren Stoffe sind dem Fachmann auf dem Gebiet der Biozide bekannt und können von diesen in Abhängigkeit der Anwendung der erfindungsgemäßen Biozidzusammensetzung ausgewählt werden.

Die erfindungsgemäße Biozidzusammensetzung kann zur Konservierung auf sehr unterschiedlichen Gebieten eingesetzt werden. Bevorzugt wird die erfindungsgemäße Zubereitung für die Gebindekonservierung, bevorzugt für die Konservierung von Anstrichmitteln, wie Farben, Lacken und Putzen, von Polymerdispersionen, Emulsionen, Slurries, Pigmentpräparationen, Wasch- und Reinigungsmitteln, und Klebstoffen verwendet.

Die Erfindung betrifft weiterhin auch Produkte, die die erfindungsgemäße Biozidzusammensetzung enthalten. Diese Produkte sind allgemein ausgewählt aus Ligninsulfonaten und Stärkepräparation in Anstrichmitteln, Farben, Lacken, Lasuren und Putzen, Emulsionen, Latices, Polymerdispersionen, Kreideaufschlämmungen, mineralischen Slurrys, keramischen Massen, Klebstoffen, Duftstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

Bei der praktischen Anwendung kann die Biozidzusammensetzung entweder als fertiges Gemisch oder durch getrennte Zugabe der einzelnen Komponenten der Zusammensetzung in das zu konservierende Produkt eingebracht werden.

Der Gehalt der Komponenten in der Konservierungsanwendung (die Anwendungskonzentration) kann über weite Bereiche hinweg je nach Anwendungszweck variieren und wird üblicherweise von dem Fachmann auf dem Gebiet der Biozide festgelegt. Die nachfolgend angegebenen Konzentrationsbereiche geben dem Fachmann einen Hinweis auf die einzusetzenden Konzentrationen.

In dem mit der erfindungsgemäßen Zusammensetzung konservierten Produkt ist die wenigstes eine Komponente ausgewählt aus der Gruppe 1,2-Benzisothiazolin-3-on, 2-Brom-2-nitropropan-1,3-diol und Zink.

Der Gehalt der Komponenten in der Konservierungsanwendung (die Anwendungskonzentration) kann über weite Bereiche hinweg je nach Anwendungszweck variieren und wird üblicherweise von dem Fachmann auf dem Gebiet der Biozide festgelegt. Die nachfolgend angegebenen Konzentrationsbereiche geben dem Fachmann einen Hinweis auf die einzusetzenden Konzentrationen.

In dem mit der erfindungsgemäßen Biozidzusammensetzung konservierten Produkt ist das Chlor-2-methylisothiazolin-3-on allgemein in einer Menge im Bereich von 1 bis 500 ppm, bevorzugt in einer Menge von 5 bis 200 ppm, bevorzugt in einer Menge von 10 bis 100 ppm, insbesondere bevorzugt in einer Menge von 10 bis 30 ppm, enthalten.

In dem mit der erfindungsgemäßen Zusammensetzung konservierten Produkt ist die wenigstes eine weitere Komponente ausgewählt aus der Gruppe 1,2-Benzisothiazolin-3-on, 2-Brom-2-nitropropan-1,3-diol und Zink.

Bei Anwesenheit von 1,2-Benzisothiazolin-3-on als weiterer Komponente ist dies in dem mit der erfindungsgemäßen Zusammensetzung konservierten Produkt allgmein in einer Menge im Bereich von 1 bis 1.000 ppm, bevorzugt in einer Menge von 5 bis 750 ppm, bevorzugt in einer Menge von 10 bis 500 ppm, insbesondere bevorzugt in einer Menge von 25 bis 250 ppm, enthalten.

Bei Anwesenheit von 2-Brom-2-nitropropan-1,3-diol als weiterer Komponente ist dies in dem mit der erfindungsgemäßen Zusammensetzung konservierten Produkt allgmein in einer Menge im Bereich von 1 bis 2.000 ppm, bevorzugt in einer Menge von 5 bis 1.000 ppm, bevorzugt in einer Menge von 10 bis 500 ppm, insbesondere bevorzugt in einer Menge von 20 bis 250 ppm, enthalten.

Bei Anwesenheit von Zink als weiterer Komponente ist dies in dem mit der erfindungsgemäßen Zusammensetzung konservierten Produkt allgemein in einer Menge im Bereich von 10 bis 5.000 ppm, bevorzugt in einer Menge von 25 bis 2.500 ppm, bevorzugt in einer Menge von 50 bis 1.000 ppm, insbesondere bevorzugt in einer Menge von 100 bis 500 ppm, enthalten.

**Die folgenden Beispiele dienen zur weiteren Veranschaulichung der vorliegenden Erfindung.**

Untersuchung der synergistischen Wirkung

Es wurde der Synergismus einer Kombination von 5-Chlor-2-methylisothiazolin-3-on, das 0,003 Gew.%, bezogen auf den Gesamtanteil des 5-Chlor-2-methyl-4-isothiazolin-3-ons, 2-Methylisothiazolin-3-on enthielt, mit jeweils einem Biozid / einer Substanz ausgewählt aus der Gruppe 1,2-Benzisothiazolin-3-on (BIT), 2-Brom-2-nitropropan-1,3-diol (Bronopol), und Zink auf eine synergistische Wechselwirkung hin untersucht.

Als Testorganismen wurden das Gram-negative Bakterium *Pseudomonas putida* (DSM 25068) verwendet. Dazu wurden Gemische mit unterschiedlichen Konzentrationen der jeweiligen Wirkstoffe hergestellt und bezüglich ihrer Wirkung auf Pseudomonas putida überprüft. Die Überprüfung erfolgte in Müller-Hinton-Bouillon MHB (pH 7.0) mit einer Zelldichte von $10^6$ Keimen pro ml.

Die Inkubationszeit der Mikrotiterplatten betrug 48 Stunden bei 30 °C. Nach 48 Stunden wurden die Ansätze auf Trübung durch Wachstum ausgewertet und zusätzlich die optische Dichte photometrisch bestimmt. Auf diese Weise wurden die minimalen Hemmkonzentrationen (MHK) der beiden Wirkstoffe einzeln und in Kombination bestimmt.

Der auftretende Synergismus wurde durch Berechnen des Synergieindex (SI) zahlenmäßig dargestellt. Die Berechnung erfolgte nach der gängigen Methode von F.C. Kull et al., Applied Microbiology, Bd. 9 (1961), S. 538. Dort wird der SI nach der folgenden Formel berechnet:

$$\text{Synergieindex SI} = Q_a/Q_A + Q_b/Q_B$$

$Q_a$ = Konzentration von Komponente A in der Mischung A + B
$Q_A$ = Konzentration von Komponente A als alleinigem Biozid
$Q_b$ = Konzentration von Komponente B in der Mischung A + B
$Q_B$ = Konzentration von Komponente B als alleinigem Biozid

Wenn der Synergieindex einen Wert von über 1 aufweist, bedeutet dies, dass ein Antagonismus vorliegt. Wenn der Synergieindex den Wert 1 annimmt, bedeutet dies, dass eine Addition der Wirkung der beiden Biozide /Verbindungen gegeben ist. Wenn der Synergieindex einen Wert von unter 1 annimmt, bedeutet dies, dass ein Synergismus der beiden Biozide besteht.

Wenn der Synergieindex einen Wert von über 1 aufweist, bedeutet dies, dass ein Antagonismus vorliegt.

Beispiel 1: Untersuchung der synergistischen Wechselwirkung zwischen Chlor-2-methyl-4-isothiazolin-3-on (CMIT) und 1,2-Benzisothiazolin-3-on (BIT)

Berechnung des Synergieindexes von Chlor-2-methyl-4-isothiazolin-3-on (CMIT) und 1,2-Benzisothiazolin-3-on (BIT) bezüglich *Pseudomonas putida* bei einer Inkubationszeit von 48 Stunden bei 30 °C.

Tabelle 1

| Qa (CMIT) [ppm] | Qb (BIT) [ppm] | Synergie Index |
|---|---|---|
| 0 | 100 | 1,00 |
| 0,25 | 75 | 0,92 |
| 0,5 | 50 | 0,83 |
| 0,5 | 40 | 0,73 |
| 0,75 | 30 | 0,80 |
| 0,75 | 20 | 0,70 |
| 1 | 10 | 0,77 |
| 1 | 5 | 0,72 |

(fortgesetzt)

| Qa (CMIT) [ppm] | Qb (BIT) [ppm] | Synergie Index |
|---|---|---|
| 1,5 | 0 | 1,00 |

Qa: Konzentration von CIT in der Mischung, die einen Endpunkt zeigt
QA: Konzentration von CIT als alleiniges Agens, das einen Endpunkt zeigt
Qb: Konzentration von BIT in der Mischung, die einen Endpunkt zeigt
QB: Konzentration von BIT als alleiniges Agens, das einen Endpunkt zeigt

Aus der Tabelle 2 ist ersichtlich, dass der optimale Synergismus, d.h. der niedrigste Synergieindex (0,69) einer Biozidzusammensetzung aus CMIT und BIT bei einem Verhältnis von 1 ppm CMIT zu 2,5 ppm BIT liegt. Ein Synergismus lässt sich nachweisen, wenn das Gewichtsverhältnis der Biozide CMIT und BIT im Bereich von 1:2,5 bis 1:300 liegt.

Beispiel 2: Untersuchung der synergistischen Wechselwirkung zwischen Chlor-2-methyl-4-isothiazolin-3-on (CMIT) und 2-Brom-2-nitropropan-1,3-diol (Bronopol)

Berechnung des Synergieindexes von Chlor-2-methyl-4-isothiazolin-3-on (CMIT) und 2-Brom-2-nitropropan-1,3-diol (Bronopol) bezüglich *Pseudomonas putida* bei einer Inkubationszeit von 48 Stunden bei 30 °C.

Tabelle 2

| Qa (CMIT) [ppm] | Qb (Bronopol) [ppm] | Synergie Index |
|---|---|---|
| 0 | 15 | 1,00 |
| 0,25 | 10 | 0,83 |
| 0,25 | 7,5 | 0,67 |
| 0,25 | 5 | 0,50 |
| 0,5 | 4 | 0,60 |
| 0,75 | 2 | 0,63 |
| 1 | 2 | 0,80 |
| 1,5 | 0 | 1,00 |

Qa: Konzentration von CIT in der Mischung, die einen Endpunkt zeigt
QA: Konzentration von CIT als alleiniges Agens, das einen Endpunkt zeigt
Qb: Konzentration von Bronopol in der Mischung, die einen Endpunkt zeigt
QB: Konzentration von Bronopol als alleiniges Agens, das einen Endpunkt zeigt

Aus der Tabelle 2 ist ersichtlich, dass der optimale Synergismus, d.h. der niedrigste Synergieindex (0,50) einer Biozidzusammensetzung aus CMIT und Bronopol bei einem Verhältnis von 0,25 ppm CMIT zu 5 ppm Bronopol liegt. Ein Synergismus lässt sich nachweisen, wenn das Gewichtsverhältnis der Biozide CMIT und Bronopol im Bereich von 1:2 bis 1:40 liegt.

Beispiel 3: Untersuchung der synergistischen Wechselwirkung zwischen Chlor-2-methyl-4-isothiazolin-3-on (CMIT) und Zink

Berechnung des Synergieindexes von Chlor-2-methyl-4-isothiazolin-3-on (CMIT) und Zink (zugegeben als Zinkchlorid, $ZnCl_2$) bezüglich *Pseudomonas putida* bei einer Inkubationszeit von 48 Stunden bei 30 °C.

Tabelle 3

| Qa (CMIT) [ppm] | Qb (Zn) [ppm] | Synergie Index |
|---|---|---|
| 0 | 240* | 1,00 |
| 0,25 | 144 | 0,77 |
| 0,5 | 96 | 0,73 |

(fortgesetzt)

| Qa (CMIT) [ppm] | Qb (Zn) [ppm] | Synergie Index |
|---|---|---|
| 0,5 | 72 | 0,63 |
| 0,75 | 36 | 0,65 |
| 1 | 6 | 0,69 |
| 1,5 | 0 | 1,00 |
| *Endpunkt >240 ppm, zur Kalkulation 240 ppm als Endpunkt angenommen | | |
| Qa: Konzentration von CIT in der Mischung, die einen Endpunkt zeigt<br>QA: Konzentration von CIT als alleiniges Agens, das einen Endpunkt zeigt<br>Qb: Konzentration von Zn in der Mischung, die einen Endpunkt zeigt<br>QB: Konzentration von Zn als alleiniges Agens, das einen Endpunkt zeigt | | |

Aus der Tabelle 3 ist ersichtlich, dass der optimale Synergismus, d.h. der niedrigste Synergieindex (0,63) einer Biozidzusammensetzung aus CMIT und $ZnCl_2$ bei einem Verhältnis von 0,5 ppm CMIT zu 72 ppm Zn liegt. Ein Synergismus lässt sich nachweisen, wenn das Gewichtsverhältnis der Komponenten CMIT und Zn im Bereich von 1:6 bis 1:576 liegt.

**Patentansprüche**

1.  Biozidzusammensetzung enthaltend 5-Chlor-2-methylisothiazolin-3-on sowie wenigstens eine weitere Komponente ausgewählt aus der Gruppe 1,2-Benzisothiazolin-3-on, 2-Brom-2-nitropropan-1,3-diol und Zink,

    **dadurch gekennzeichnet, dass** die Zusammensetzung Methyl-4-isothiazolin-3-on im Bereich von 0 bis 2 Gew.-%, bezogen auf den Gesamtanteil des 5-Chlor-2-methyl-4-isothiazolin-3-ons, enthält,
    **dadurch gekennzeichnet, dass** das Gewichtsverhältnis von 5-Chlor-2-methylisothiazolin-3-on zu 1,2-Benzisothiazolin-3-on im Bereich von 1:2,5 bis 1:300 liegt,
    dass das Gewichtsverhältnis von 5-Chlor-2-methylisothiazolin-3-on zu 2-Brom-2-nitropropan-1,3-diol im Bereich von 1:2 bis 1:40 liegt und
    dass das Gewichtsverhältnis von 5-Chlor-2-methylisothiazolin-3-on zu Zink im Bereich von 1:6 bis 1:576 liegt, wobei die Zinkverbindung aus der Gruppe bestehend aus Zinkoxid, Zinkchlorid und Zinkcarbonat ausgewählt wird.

2.  Biozidzusammensetzung nach Anspruch 1, **dadurch gekennzeichnet, dass** diese das 5-Chlor-2-methylisothiazolin-3-on sowie das wenigstens eine weitere Biozid in einer Gesamtkonzentration von 0,5 bis 50 Gew.-%, bezogen auf die gesamte Biozidzusammensetzung enthält.

3.  Biozidzusammensetzung nach einem der Ansprüche 1 oder 2, **dadurch gekennzeichnet, dass** sie ein polares und/oder unpolares Medium umfasst.

4.  Biozidzusammensetzung nach Anspruch 3, **dadurch gekennzeichnet, dass** sie als polares flüssiges Medium Wasser, einen aliphatischen Alkohol mit 1 bis 4 Kohlenstoffatomen, ein Glykol, einen Glykolether, einen Glykolester, ein Polyethylenglykol, ein Propylenglykol, N,N-Dimethylformamid, 2,2,4-Trimethylpentandiolmonoisobutyrat oder ein Gemisch aus solchen umfasst.

5.  Biozidzusammensetzung nach einem der Ansprüche 1 bis 4, **dadurch gekennzeichnet, dass** sie flüssige Zubereitung vorliegt.

6.  Verwendung der Biozidzusammensetzung nach einem der Ansprüche 1 bis 5 für die Gebindekonservierung.

7.  Verwendung der Biozidzusammensetzung nach Anspruch 6 für die Gebindekonservierung von Anstrichmitteln wie Farben, Lacken und Putzen, von Polymerdispersionen, Emulsionen, Latices und Klebstoffen.

8.  Konserviertes Produkt enthaltend eine Biozidzusammensetzung wie in einem der Ansprüche 1 bis 6 beschrieben.

9. Konserviertes Produkt nach Anspruch 8, ausgewählt aus Ligninsulfonaten und Stärkepräparation in Anstrichmitteln, Farben, Lacken, Lasuren und Putzen, Emulsionen, Latices, Polymerdispersionen, Kreideaufschlämmungen, mineralischen Slurrys, keramischen Massen, Klebstoffen, Duftstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithographischen Flüssigkeiten, Verdickern, kosmetischen Produkten, Toilettenartikeln, Wasserkreisläufen, Flüssigkeiten bei der Holzverarbeitung, Flüssigkeiten bei der Erdölgewinnung, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

**Claims**

1. A biocidal composition containing 5-chloro-2-methylisothiazolin-3-one as well as at least one further component selected from the group of 1,2-benzisothiazolin-3-one, 2-bromo-2-nitropropane-1,3-diol and zinc,

   **characterized in that** the composition contains methyl-4-isothiazolin-3-one in the range of 0 to 2 wt. %, in relation to the total proportion of 5-chloro-2-methyl-4-isothiazolin-3-one,
   **characterized in that** the weight ratio of 5-chloro-2-methylisothiazolin-3-one to 1,2-benzisothiazolin-3-one lies in the range of 1:2.5 to 1:300,
   **in that** the weight ratio of 5-chloro-2-methylisothiazolin-3-one to 2-bromo-2-nitropropane-1,3-diol lies in the range of 1:2 to 1:40 and
   **in that** the weight ratio of 5-chloro-2-methylisothiazolin-3-one to zinc lies in the range of 1:6 to 1:576, wherein the zinc compound is selected from the group consisting of zinc oxide, zinc chloride, and zinc carbonate.

2. The biocidal composition as claimed in claim 1, **characterized in that** it contains the 5-chloro-2-methylisothiazolin-3-one as well as the at least one further biocide in a total concentration of 0.5 to 50 wt. %, in relation to the total biocidal composition.

3. The biocidal composition as claimed in claim 1 or 2, **characterized in that** it contains a polar and/or a nonpolar medium.

4. The biocidal composition as claimed in claim 3, **characterized in that** it contains, as the polar liquid medium, water, an aliphatic alcohol with 1 to 4 carbon atoms, a glycol, a glycol ether, a glycol ester, a polyethylene glycol, a propylene glycol, N,N-dimethylformamide, 2,2,4-trimethylpentane diol monoisobutyrate or a mixture of these.

5. The biocidal composition as claimed in any one of claims 1 to 4, **characterized in that** it is present as a liquid preparation.

6. A use of the biocidal composition as claimed in any one of claims 1 to 5 for canning preservation.

7. The use of the biocidal composition as claimed in claim 6 for canning preservation of coating materials such as paints, varnishes and plaster, of polymer dispersions, emulsions, latexes and adhesives.

8. A preserved product containing the biocidal composition as claimed in any one of claims 1 to 6.

9. The preserved product as claimed in claim 8, selected from lignin sulfonates and starch preparations in coating materials, paints, varnishes, glazes and plasters, emulsions, latexes, polymer dispersions, chalk slurries, mineral slurries, ceramics, adhesives, fragrances, casein-containing products, starch-containing products, bitumen emulsions, surfactant solutions, fuels, detergents, pigment pastes and pigment dispersions, inks, lithographic liquids, thickeners, cosmetic products, toilet articles, water systems, fluids in wood working, fluids in oil extraction, fluids in paper processing, fluids in leather production, fluids in textile production, drilling and cutting oils, hydraulic fluids and coolants.

**Revendications**

1. Composition biocide contenant de la 5-chloro-2-méthylisothiazolin-3-one ainsi qu'au moins un autre composant choisi dans le groupe constitué par la 1,2-benzisothiazolin-3-one, le 2-bromo-2-nitropropane-1,3-diol et le zinc,

**caractérisée en ce que** la composition contient de la méthyl-4-isothiazolin-3-one dans la plage de 0 à 2 % en poids, par rapport à la proportion totale de 5-chloro-2-méthyl-4-isothiazolin-3-one,

**caractérisée en ce que** le rapport en poids de la 5-chloro-2-méthylisothiazolin-3-one à la 1,2-benzisothiazolin-3-one est situé dans la plage de 1:2,5 à 1:300,

**en ce que** le rapport en poids de la 5-chloro-2-méthylisothiazolin-3-one au 2-bromo-2-nitropropane-1,3-diol est situé dans la plage de 1:2 à 1:40 et

**en ce que** le rapport en poids de la 5-chloro-2-méthylisothiazolin-3-one au zinc est situé dans la plage de 1:6 à 1:576, le composé de zinc étant choisi dans le groupe constitué par l'oxyde de zinc, le chlorure de zinc et le carbonate de zinc.

2. Composition biocide selon la revendication 1, **caractérisée en ce qu'**elle contient la 5-chloro-2-méthylisothiazolin-3-one ainsi que l'au moins un autre biocide en une concentration totale de 0,5 à 50 % en poids, par rapport à la composition biocide totale.

3. Composition biocide selon l'une des revendications 1 ou 2, **caractérisée en ce qu'**elle comprend un milieu polaire et/ou apolaire.

4. Composition biocide selon la revendication 3, **caractérisée en ce qu'**elle comprend, comme milieu liquide polaire, de l'eau, un alcool aliphatique comprenant 1 à 4 atomes de carbone, un glycol, un glycoléther, un ester de glycol, un polyéthylèneglycol, un propylèneglycol, du N,N-diméthylformamide, du mono-isobutyrate de 2,2,4-triméthylpentanediol ou un mélange de ceux-ci.

5. Composition biocide selon l'une des revendications 1 à 4, **caractérisée en ce qu'**elle se présente sous la forme d'une préparation liquide.

6. Utilisation de la composition biocide selon l'une des revendications 1 à 5 pour la conservation dans des récipients.

7. Utilisation de la composition biocide selon la revendication 6 pour la conservation dans des récipients d'agents de revêtement tels que des peintures, des vernis et des enduits, de dispersions polymères, d'émulsions, de latex et d'adhésifs.

8. Produit conservé contenant une composition biocide telle que décrite dans l'une des revendications 1 à 6.

9. Produit conservé selon la revendication 8, choisi parmi les ligninesulfonates et les préparations d'amidon dans les agents de revêtement, les peintures, les vernis, les lasures et les enduits, les émulsions, les latex, les dispersions polymères, les suspensions de craie, les suspensions minérales, les masses céramiques, les adhésifs, les parfums, les produits contenant de la caséine, les produits contenant de l'amidon, les émulsions de bitume, les solutions tensioactives, les carburants, les agents de nettoyage, les pâtes pigmentaires et les dispersions pigmentaires, les encres, les liquides pour lithographie, les épaississants, les produits cosmétiques, les articles de toilette, les circuits d'eau, les liquides de traitement du bois, les liquides d'extraction du pétrole, les liquides de traitement du papier, les liquides de fabrication du cuir, les liquides de fabrication de textiles, les fluides de forage et les huiles de coupe, les liquides hydrauliques et les lubrifiants réfrigérants.

**IN DER BESCHREIBUNG AUFGEFÜHRTE DOKUMENTE**

**In der Beschreibung aufgeführte Patentdokumente**

- EP 1005271 B1
- EP 0676140 A
- EP 1030558 B
- WO 2006074788 A

**In der Beschreibung aufgeführte Nicht-Patentliteratur**

- **VON F.C. KULL et al.** *Applied Microbiology*, 1961, vol. 9, 538